# EUROPEAN PATENT SPECIFICATION

(11) **EP 1 599 875 B1**
(45) Date of publication and mention of the grant of the patent: **27.09.2006**
(21) Application number: 04711425.1
(22) Date of filing: 16.02.2004
(51) Int. Cl.: G11B 7/24, G11B 7/00

(54) **MULTI-STACK INFORMATION CARRIER WITH ELECTROCHROMIC MATERIALS**
MEHRSTAPEL-INFORMATIONSTRÄGER MIT ELEKTROCHROMISCHEN MATERIALIEN
SUPPORT D'INFORMATIONS A PLUSIEURS EMPILEMENTS COMPRENANT DES MATERIAUX ELECTROCHROMES

(30) Priority: 27.02.2003 EP 03290470
(43) Date of publication of application: 30.11.2005
(73) Proprietor: Koninklijke Philips Electronics N.V., 5621 BA Eindhoven (NL)
(72) Inventor: WILDERBEEK, Johannes c/o Société Civile SPID, Paris 75008 (FR); BALISTRERI, Marcello c/o Société Civile SPID, Paris 75008 (FR); VAN DER MARK, Martinus c/o Société Civile SPID, Paris 75008 (FR); MEINDERS, Erwin c/o Société Civile SPID, Paris 75008 (FR); BUSCH, Christopher,C/o Société Civile Spid, Paris 75008 (FR)
(74) Representative: Chaffraix, Jean
(86) International application number: PCT/IB2004/000480
(87) International publication number: WO 2004/077422

(56) References cited:
- US-A- 4 842 381
- US-A- 5 279 932
- US-A- 5 659 533
- PATENT ABSTRACTS OF JAPAN vol. 1999, no. 12, 29 October 1999 (1999-10-29) -& JP 11 185288 A (AOKI TAKESHI), 9 July 1999 (1999-07-09)
- PATENT ABSTRACTS OF JAPAN vol. 0062, no. 45 (P-159), 3 December 1982 (1982-12-03) & JP 57 142617 A (FUJITSU KK), 3 September 1982 (1982-09-03)

## Description

### FIELD OF THE INVENTION

The present invention relates to a multi-stack optical information carrier.

The present invention also relates to a scanning device for scanning a multi-stack optical information carrier.

The present invention also relates to a method of reading from, a method of recording on and a method of erasing a multi-stack optical information carrier.

The present invention is particularly relevant for optical data storage and optical disc apparatuses for reading and/or recording data from and/or on multi-stack optical discs.

### BACKGROUND OF THE INVENTION

In the field of optical recording, increasing the capacity of the information carrier is the trend. An already investigated way for increasing the data capacity consists in using a plurality of information layers in the information carrier. For example, a DVD (Digital Video Disc) can comprise two information layers. Information is recorded on or read from an information layer by means of an optical beam, using local refractive index variations or the presence of surface relief structures.

However, the number of information layers in such an information carrier is limited. First, because the light intensity of the optical beam decreases with each additional addressed layer. Actually, when the optical beam has to pass many layers for addressing a layer, interaction takes place in the non-addressed layers, reducing the intensity of the optical beam. Additionally, the local refractive index variations of the written information patterns in the non-addressed layers cause refraction and scattering of the traversing light-beam, leading to deteriorated writing and reading.

Hence, conventional optical data storage techniques are not suitable for multi-layer information carriers, in particular for information carriers comprising more than three layers.

Document JP-A-11 185 288 (c.f. the preamble of claim 1) discloses an information carrier comprising a plurality of information stacks, wherein each stack comprises an information layer and an electrochromic layer between two electrodes. The electrochromic layer comprises an electrolyte layer and a coloring layer.

### SUMMARY OF THE INVENTION

It is an object of the invention to provide an information carrier, which can comprise an increased number of layers.

To this end, the invention proposes an information carrier for scanning information by means of an optical beam having a wavelength, said information carrier comprising at least two information stacks, wherein each stack comprises a counter electrode, an electrolyte layer and an information layer comprising an electrochromic material whose optical properties at the wavelength of the optical beam depend on a potential difference applied between the information layer and the counter electrode.

According to the invention, the information layers comprise an electrochromic material, whose optical properties can be switched by applying a potential difference. Hence, by applying suitable potential differences to the stacks, it is possible to scan one layer having optical properties suitable for interacting with the optical beam, whereas the optical properties of the other layers are chosen so that the interactions between these non-addressed layers and the optical beam are reduced. As a consequence, the number of layers can be increased.

In an advantageous embodiment of the invention, an information layer serves as counter electrode for another information layer. This reduces the number of layers of the stacks. Hence, the information carrier is less bulky, and the manufacturing process of the information carriers is simplified.

In a preferred embodiment of the invention, the information carrier comprises pits and lands. Such an information carrier can be manufactured by conventional techniques, such as embossing. According to this preferred embodiment, the information is written during the manufacturing process. As will be explained in more details in the following, the switching of layers allows to obtain only one layer interacting with the optical beam during reading of the information carrier. Hence, the number of information layers in such an information carrier can be relatively high.

In another advantageous embodiment of the invention, the electrochromic material has an ability to take up or release electrons, which can be locally reduced by means of the optical beam in order to write information on the information layer. According to this embodiment, information can be written by a user on the information carrier.

In another preferred embodiment of the invention, the electrolyte layer has a temperature-dependent mobility threshold. According to this embodiment, information can be written by a user, then erased and rewritten on the information carrier.

Advantageously, the information layer further comprises a thermochromic material having temperature-dependent optical properties at the wavelength of the optical beam. When the electrolyte layer has a temperature-dependent mobility threshold, allowing rewriting of information on the information carrier, the layers of the information carrier all have the same optical properties during read-out of the information carrier. Hence, the non-addressed layers interact with the optical beam, which reduces the possible number of layers. The use of a thermochromic material reduces the interaction between the optical beam and the layers, because the thermochromic material improves the interaction between the optical beam and the addressed layer.

Preferably, an information stack further comprises a photoconductive layer for allowing a transfer of electrons in the information layer when illuminated at the wavelength of the optical beam. When the electrolyte layer has a temperature-dependent mobility threshold, allowing writing marks on the information carrier, the diffusion of heat in the electrolyte layer during writing of information makes the marks relatively large. The use of a photoconductive layer reduces the size of the written marks, hence increasing the data capacity of the information carrier.

The invention also relates to an optical scanning device for scanning an information carrier by means of an optical beam having a wavelength, said information carrier comprising at least two information stacks, wherein each stack comprises a counter electrode, an electrolyte layer and an information layer comprising an electrochromic material whose optical properties at the wavelength of the optical beam depend on a potential difference applied between the information layer and the counter electrode, said optical scanning device comprising means for generating the optical beam, means for focusing said optical beam on an information layer and means for applying a potential difference between the information layer and the counter electrode of a stack.

Advantageously, the optical device comprises a clamper for receiving the information carrier, said clamper comprising contacts for applying a potential difference between the information layer and the counter electrode of a stack. Hence, a conventional optical device may be used for scanning information carriers according to the invention, in that contacts in the clamper of said conventional optical device and means for applying potential differences between these contacts are added.

The invention also relates to a method of reading information from an information carrier by means of an optical beam having a wavelength, said information carrier comprising at least two information stacks, wherein each stack comprises a counter electrode, an electrolyte layer and an information layer comprising an electrochromic material whose optical properties at the wavelength of the optical beam depend on a potential difference applied between the information layer and the counter electrode, said method comprising the steps of applying a potential difference between the information layer and the counter electrode of the information stack from which information is to be read and focusing the optical beam on the information layer of said stack.

The invention further relates to a method of recording information on an information carrier by means of an optical beam having a wavelength, said information carrier comprising at least two information stacks, wherein each stack comprises a counter electrode, an electrolyte layer and an information layer comprising an electrochromic material whose optical properties at the wavelength of the optical beam depend on a potential difference applied between the information layer and the counter electrode, said method comprising the step of focusing the optical beam on the information layer of the information stack on which information is to be recorded in order to locally reduce the ability of the electrochromic material to take up or release electrons.

The invention also relates to a method of recording information on an information carrier by means of an optical beam having a wavelength, said information carrier comprising at least two information stacks, wherein each stack comprises a counter electrode, an electrolyte layer having a temperature-dependent mobility threshold and an information layer comprising an electrochromic material whose optical properties at the wavelength of the optical beam depend on a potential difference applied between the information layer and the counter electrode, said method comprising the steps of focusing the optical beam on the information layer of the information stack on which information is to be recorded in order to locally heat the electrolyte layer of said stack above said mobility threshold, and applying a potential difference between the information layer and the counter electrode of said stack.

The invention further relates to a method of erasing information from an information layer on which information has been recorded according to the method described above, said method of erasing comprising the steps of heating the electrolyte layer of said stack above said mobility threshold by means of the optical beam, and applying a reverse potential difference between the information layer and the counter electrode of said stack.

These and other aspects of the invention will be apparent from and will be elucidated with reference to the embodiments described hereinafter.

### BRIEF DESCRIPTION OF THE DRAWINGS

The invention will now be described in more detail, by way of example, with reference to the accompanying drawings, in which:
- Figs. 1a and 1b show a first ROM information carrier in accordance with the invention;
- Figs. 2a, 2b, and 2c show a second, a third and a fourth ROM information carriers in accordance with the invention;
- Figs. 3a, 3b and 3c show a first, a second and a third ROM information carrier in accordance with an advantageous embodiment of the invention;
- Fig. 4 shows a WORM information carrier in accordance with the invention;
- Figs. 5a and 5b show a first and a second RW information carrier in accordance with the invention; and
- Fig. 6 shows an optical device in accordance with the invention.

### DETAILED DESCRIPTION OF THE INVENTION

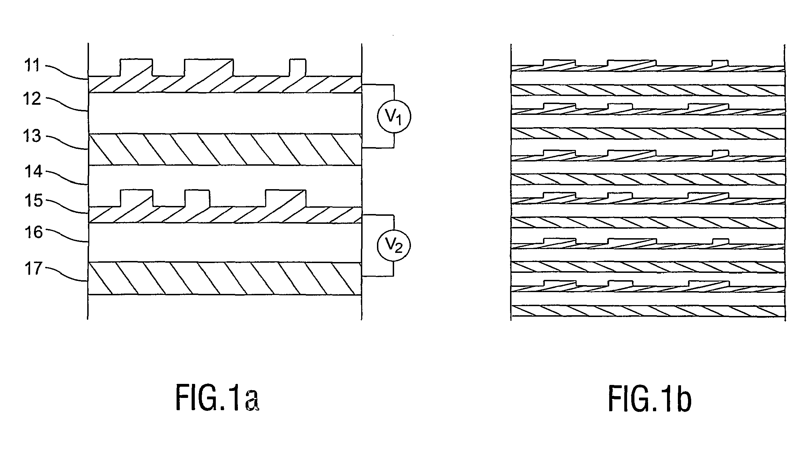

A first ROM information carrier in accordance with the invention is depicted in Fig.la. Such an information carrier comprises a first information layer 11, a first electrolyte layer 12, a first counter electrode 13, a spacer layer 14, a second information layer 15, a second electrolyte layer 16 and a second counter electrode 17. The first information layer 11, the first electrolyte layer 12 and the first counter electrode 13 form a first information stack, the second information layer 15, the second electrolyte layer 16 and the second counter electrode 17 form a second information stack. The two information stacks are separated by the spacer layer 14. An information carrier in accordance with the invention may comprise more than two information stacks. For example, an information carrier in accordance with the invention may comprise 10, 20 or up to 100 or more information stacks. For example, an information carrier in accordance with the invention, which comprises 6 information stacks, is depicted in Fig. 1b

This information carrier is a ROM (Read Only Memory) information carrier, which means that a user cannot record information on this carrier. The information is recorded during a manufacturing process and cannot be erased. The information layers 11 and 15 comprise pits and lands, which are obtained by means of conventional techniques, such as embossing and printing.

This information carrier is intended to be scanned by an optical beam, which has a wavelength 1. The first and second electrolyte layers 12 and 16, the first and second counter electrodes 13 and 17 as well as the spacer layer 14, are chosen to be transparent at the wavelength 1, or at least to have a very low absorption at this wavelength, in order not to interact with the optical beam.

The first and second information layers 11 and 15 comprise an electrochromic material. An electrochromic material is a material having optical properties, which can change as a result of electron uptake or loss. Electrochromic materials are known to those skilled in the art. For example, the publication "Electrochromism: Fundamentals and Applications", by Paul M.S. Monk et al. and published in 1995, describes the properties of electrochromic materials. Preferably, the electrochromic materials used in an information carrier in accordance with the invention are thiophene derivatives, such as poly(3,4-ethylenedioxythiophene), also called PEDT or PEDOT and described, for example, in "Poly(3,4-ethylenedioxythiophene) and Its Derivatives: Past, Present and Future", by L. Bert Goenendaal et al., published in Advanced Materials 2000, 12, No.7.

In the example of Fig.1, the electrochromic material of the first and second information layers 11 and 15 is the same, and has a reduced state and an oxidized state. The electrochromic material is chosen to have a high absorption and reflection at the wavelength 1 when it is in its reduced state, and a low absorption and reflection at the wavelength 1 when it is in its oxidized state. Of course, an alternative electrochromic material may be used, which has a high absorption and reflection at the wavelength 1 when it is in its oxidized state, and a low absorption and reflection at the wavelength 1 when it is in its reduced state.

When the first information layer 11 is scanned for reading information from this first information layer 11, a potential difference V1 is applied between the first information layer 11 and the first counter electrode 13, the first information layer 11 being at a higher potential than the first counter electrode 13. A current flows from the first information layer 11 to the first counter electrode 13, whereas electrons are transported from the first counter electrode 13 to the first information layer 11. Electrons are absorbed by the electrochromic materials, which becomes reduced. For reasons of electrical neutrality, positive ions from the first electrolyte layer 12 are absorbed by the first information layer 11 or negative ions are expelled by the first information layer 11, and negative ions from the first electrolyte 12 are absorbed by the first counter electrode 13 or positive ions are expelled by the first counter electrode 13. Hence, the first counter electrode is an ion-accepting and donating electrode. The potential difference V1 is chosen such that, when applied, the absorption and reflection of the first information layer 11 becomes relatively high at the wavelength 1. The required potential difference V1 depends on the wavelength 1, the electrochromic material, the electrolyte, the counter electrode, and optional additional electrodes in the information stack.

Then, once the absorption and reflection of the first information layer 11 have become high, the potential difference can be cut. Actually, the used electrochromic materials display bistability, which means that their optical properties persist when no potential difference is applied. As the absorption and reflection of the first information layer 11 are high, information can be read from this information layer by conventional read-out techniques, such as the phase difference read-out principle used, for example, for read-out of CD-ROM.

The electrolyte layer of an information stack comprises an electrolyte, which should be able to provide ions to the information layer and the counter electrode of this information stack. Preferably, solid or elastomeric polymeric electrolytes are used in an information carrier in accordance with the invention. These electrolytes consist of polymers comprising ion-labile groups, or consist of polymers with dissolved salts. Examples of polymers with dissolved salts are crosslinked polyethers, polyethylene oxide, polyvinyl alcohol or polymethyl methacrylate, with salts such as lithium chlorate, triflic acid or phosphoric acid.

Once the information of the first information layer 11 has been read, the second information layer 15 is scanned. First, the first information layer 11 is made transparent in that a potential difference -V1 is applied between the first information layer 11 and the first counter electrode 13, which is a reverse potential difference compared with V1. As a consequence, the electrochromic material of the first information layer 11 becomes oxidized, in which state it has a low absorption and reflection at the wavelength 1. The potential difference -V1 can then be cut, because of the bistability of the electrochromic material of the first information layer 11. Then, the second information layer 15 is made absorbent in that a potential difference V2 is applied between the second information layer 15 and the second counter electrode 17. In this example, V2 is equal to V1 because the first and second information stacks comprise the same electrochromic material. If different electrochromic materials are used in the first and second information layers 11 and 15, V2 may differ from V1. Once the second information layer 15 has become absorbent, the potential difference V2 is cut, because of the bistability of the used electrochromic material.

Once the absorption of the second information layer 15 has become high, information can be read from this information layer. The first information layer 11 does not perturb read-out of information, because the first information layer 11 has been made transparent. As a consequence, it is possible to address only one information layer, while the rest of the information carrier is transparent or has a low absorption and reflection. The desired layer is addressed by application of the suitable potential differences between the information layers and the counter electrodes of the different information stacks.

An information carrier in accordance with the invention, comprising the abovementioned layers, may be manufactured using conventional techniques such as embossing, moulding, photolithographic techniques, micro-contact printing or vapour deposition.

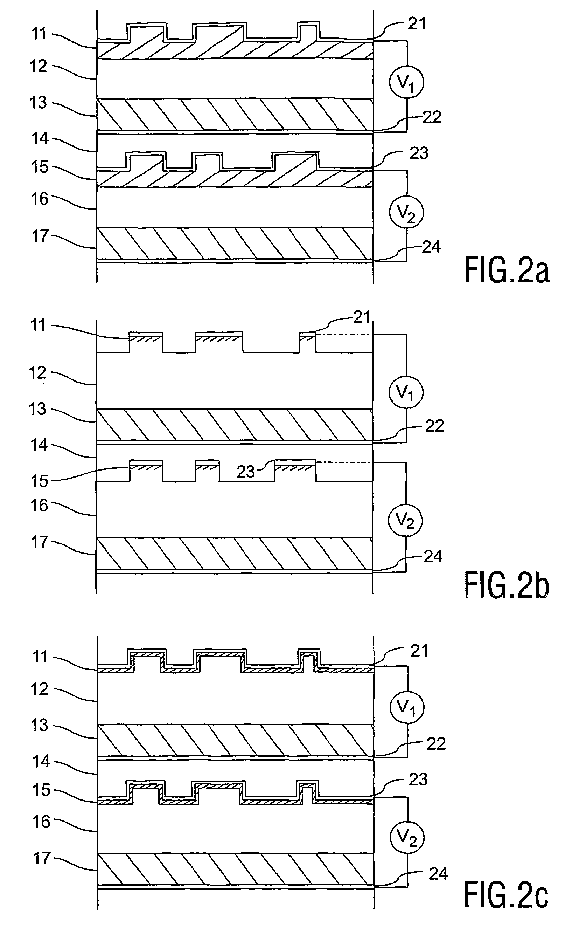

Figs. 2a, 2b and 2c show a second, a third and a fourth ROM information carrier in accordance with the invention. In these Figures, numbers identical to numbers of Fig. 1a stand for the same entities. These information carriers comprise a first and a second information stack. The first information stack comprises a first electrode 21 and a second electrode 22. The second information stack comprises a third electrode 23 and a fourth electrode 24. The first, second, third and fourth electrodes 21 to 24 are chosen to be transparent at the wavelength 1.

In Fig. 2a, the first and second information layers 11 and 15 are patterned by conventional techniques, such as embossing. The first and second electrodes 21 and 23 are deposited on the first and second information layers 11 and 15 respectively, by conventional techniques, such as vapour deposition.

In order to switch the first information layer 11 from a transparent state to an absorbent state at the wavelength 1, a suitable potential difference is applied between the first and second electrodes 21 and 22. This potential difference depends, inter alia, on the nature of the first and second electrodes 21 and 22. Examples of materials which may be used for the first and second electrodes 21 and 22 are ITO (Indium Tin Oxide), PPV ( poly(phenylenevinylene)), PEDOT (poly(3,4-ethylenedioxythiophene) and other polythiophene derivatives. In order to switch the first information layer 11 from an absorbent state to a transparent state at the wavelength 1, a reverse potential difference is applied between the first and second electrodes 21 and 22. This description also applies to the second information stack.

In Fig. 2b, the first and second electrolyte layers 12 and 16 are patterned. The first and second information layers 11 and 15, comprising electrochromic material, are deposited on the lands of the electrolyte layers 12 and 16. The information layers 11 and 15 are continuous layers, as the only discontinuities are caused by isolated pits. The information layers 11 and 15 are deposited on the patterned electrolyte layers 12 and 16, by means of conventional techniques, such as offset printing. Electrodes 21 and 23 are deposited on the information layers 11 and 15. The potential differences are applied between the first and second electrodes 21 and 22, and the third and fourth electrodes 23 and 24, respectively.

In Fig. 2c, the first and second electrolyte layers 12 and 16 are patterned. The first and second information layers 11 and 15, comprising electrochromic material, are deposited on the patterned electrolyte layers 12 and 16, by conventional techniques, such as vapour deposition. Electrodes 21 and 23 are deposited on the information layers 11 and 15. The potential differences are applied between the first and second electrodes 21 and 22, and the third and fourth electrodes 23 and 24, respectively.

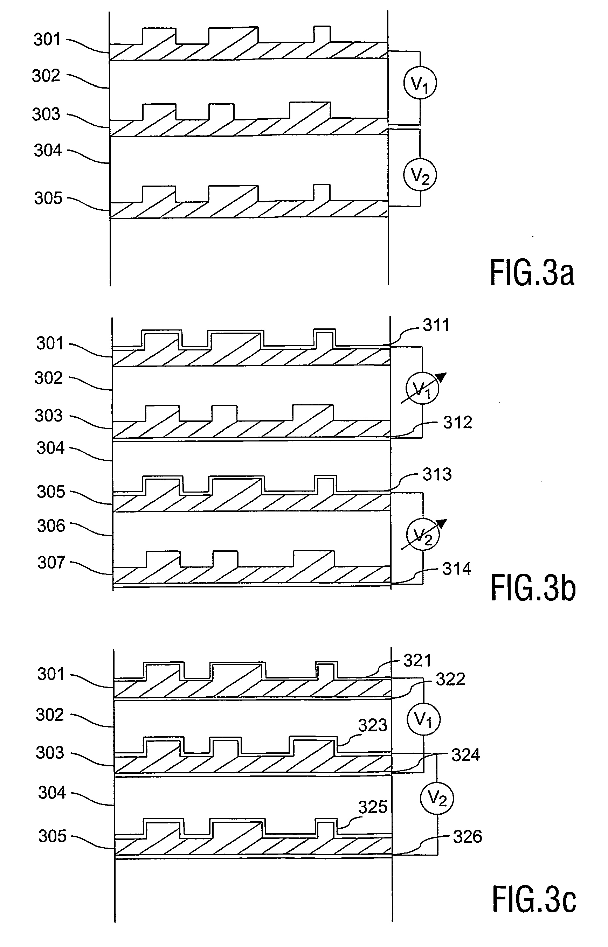

Fig. 3a shows a first ROM information carrier, wherein an information layer serves as counter electrode for another information layer. This information carrier comprises a first, a second and a third information layer 301, 303 and 305, and a first and a second electrolyte layer 302 and 304. The first information layer 301, the first electrolyte layer 302 and the second information layer 303 form a first information stack. The second information layer 303, the second electrolyte layer 304 and the third information layer 305 form a second information stack. The first and second information stacks thus have two information layers and two counter electrodes.

In the first information stack, the second information layer 303 serves as counter electrode for the first information layer 301, and the first information layer 301 serves as counter electrode for the second information layer 303. Actually, the first and second information layers 301 and 303 comprise electrochromic materials, and are thus ion-accepting and donating electrodes. In the second information stack, the third information layer 305 serves as counter electrode for the second information layer 303, and the second information layer 303 serves as counter electrode for the third information layer 305.

In order to address the first information layer 301, the first information layer 301 is made absorbent in that a suitable potential difference V1 is applied between the first information layer 301 and the second information layer 303. Then, in order to address the second information layer 303, the first information layer 301 is made transparent in that a reverse potential difference -V1 is applied between the first information layer 301 and the second information layer 303. The second information layer 303 is reduced thereby, and becomes absorbent at the wavelength 1. Hence, the second information layer 303 is addressed and can be scanned.

In order to address the third information layer 305, a potential difference V2 is applied between the second information layer 303 and the third information layer 305. This potential difference V2 is equal to -V1, as the electrochromic materials in the information layers 301, 303 and 305 are the same. The third information layer 305 is reduced and becomes absorbent at the wavelength 1, and the second information layer 303 is oxidized and becomes transparent at the wavelength 1. As a consequence, only the third information layer 305 is absorbent at the wavelength 1, so that the first and second information layers 301 and 303 do not perturb the scanning of the third information layer 305.

Fig. 3b shows a second ROM information carrier, wherein an information layer serves as counter electrode for another information layer. This information carrier comprises a first, a second, a third and a fourth information layer 301, 303, 305 and 307, a spacer layer 304, a first and a second electrolyte layer 302 and 306, and a first, a second, a third and a fourth electrode 311 to 314. The first electrode 311, the first information layer 301, the first electrolyte layer 302, the second information layer 303 and the second electrode 312 form a first information stack. The third electrode 313, the third information layer 305, the second electrolyte layer 306, the fourth information layer 307 and the fourth electrode 314 form a second information stack. The two information stacks are separated by the spacer layer 304.

In order to address the first information layer 301, the first information layer 301 is made absorbent in that a suitable potential difference V1 is applied between the first electrode 311 and the second electrode 312. Then, in order to address the second information layer 303, the first information layer 301 is made transparent by application of a reverse potential difference -V1 between the first electrode 311 and the second electrode 312. As a consequence, the second information layer 303 becomes absorbent at the wavelength 1. Hence, the second information layer 303 is addressed and can be scanned.

Then, in order to address the third information layer 305, the second information layer 303 has to be made transparent, so that the scanning of the third information layer 305 is not perturbed by the second information layer 303. This cannot be done by applying a potential difference V1 between the first electrode 311 and the second electrode 312, because the first information layer 301 would become absorbent at the wavelength 1, hence perturbing the scanning of the third information layer 305. As a consequence, a potential difference different from V 1 is applied between the first electrode 311 and the second electrode 312, so that at this potential difference, the first information layer 301 and the second information layer 303 are transparent. This is possible, because the absorption of certain electrochromic materials depends on the applied potential difference, as explained, for example, in "Electrochromism: Fundamentals and Applications", page 145. For example, a potential difference V1/2 may be applied. The potential difference to be applied in order to make the first and second information layers 301 and 303 transparent depends, inter alia, on the electrochromic material used.

The third information layer 305 is then addressed by the application of a potential difference V2 between the third electrode 313 and the fourth electrode 314. In this example, V2 is equal to V1, because the electrochromic materials used in the information layers are the same. Then, in order to address the fourth information layer 307, a reverse potential difference -V2 is applied between the third electrode 313 and the fourth electrode 314.

Fig. 3c shows a third ROM information carrier, wherein an information layer serves as counter electrode for another information layer.

This information carrier comprises a first, a second and a third information layer 301, 303 and 305, a first and a second electrolyte layer 302 and 304, and a first, a second, a third, a fourth, a fifth and a sixth electrode 321 to 326. The first electrode 321, the first information layer 301, the first electrolyte layer 302, the second information layer 303 and the fourth electrode 324 form a first information stack. The third electrode 323, the second information layer 303, the second electrolyte layer 304, the third information layer 305 and the sixth electrode 326 form a second information stack. In this information carrier, the six electrodes 321 to 326 are porous, which means that ions from the electrolytes 302 and 304 can pass through these electrodes 321 to 326.

In order to address the first information layer 301, the first information layer 301 is made absorbent in that a suitable potential difference V1 is applied between the first electrode 321 and the fourth electrode 324. As the second and third electrodes 322 and 323 are porous, ions can flow between the first and second information layers 301 and 303, so that the electrochemical process can be performed.

Then, in order to address the second information layer 303, the first information layer is made transparent by the application of a reverse potential difference -V1 between the first electrode 321 and the fourth electrode 324. The second information layer 303 is reduced thereby and becomes absorbent at the wavelength 1. Hence, the second information layer 303 is addressed and can be scanned.

In order to address the third information layer 305, a potential difference V2 is applied between the third electrode 323 and the sixth electrode 326. This potential difference V2 is equal to -V1, as the electrochromic materials in the information layers 301, 303 and 305 are the same. The third information layer 305 is reduced and becomes absorbent at the wavelength 1, and the second information layer 303 is oxidized and becomes transparent at the wavelength 1. As a consequence, only the third information layer 305 is absorbent at the wavelength 1, so that the first and second information layers 301 and 303 do not perturb the scanning of the third information layer 305.

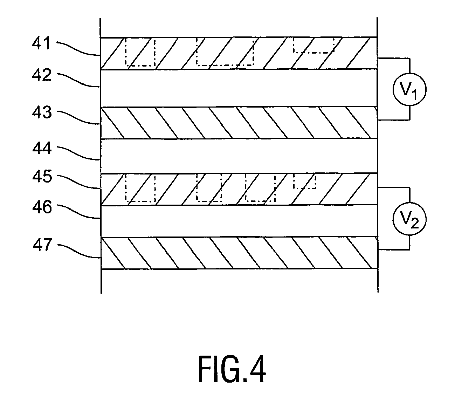

Fig. 4 shows a WORM (Write Once Read Many) information carrier in accordance with the invention. This information carrier comprises a first information layer 41, a first electrolyte layer 42, a first counter electrode 43, a spacer layer 44 a second information layer 45, a second electrolyte layer 46 and a second counter electrode 47. The first information layer 41, the first electrolyte layer 42 and the first counter electrode 43 form a first information stack, the second information layer 45, the second electrolyte layer 46 and the second counter electrode 47 form a second information stack. The two information stacks are separated by the spacer layer 44.

The first and second information layers 41 and 45 comprise an electrochromic material having an ability to take up or release electrons, which can be locally reduced by means of the optical beam at the wavelength 1. In order to locally reduce the ability to take up or release electrons of the electrochromic materials, a relatively high power of the optical beam is required. The high power is absorbed in the material and changes its material properties, for example by melting, annealing, photochemical reactions, thermal damaging or deterioration. This relatively high power is used during writing of information on the information carrier, whereas a smaller power is used during reading, the latter being incapable of reducing the ability to take up or release electrons of the electrochromic materials.

In order to write information on the first information layer 41, the optical beam having the relatively high power is focused on the first information layer 41, in order to locally reduce the ability to take up or release electrons of the electrochromic material, for writing marks. In Fig. 4, the marks, where the ability to take up or release electrons of the electrochromic material has been reduced, are represented by dotted lines. The depth of the marks in the information layers can be chosen in that the power of the optical beam is varied, or the time during which the optical beam is focused on a mark is varied. Having different mark depths allows multilevel recording. In single-level recording, typically two reflection states or levels are used, whereas more reflection levels are defined to represent data in the case of multi-level recording.

In order to write information on the second information layer 45, the optical beam having the relatively high power is focused on the second information layer 45, in order to locally reduce the ability to take up or release electrons of the electrochromic material, for writing marks.

The information layer on which information has to be written may be made absorbent before the relatively high power optical beam is focused on it. This improves absorption of the relatively high-power optical beam, which increases the reduction of the ability to take up or release electrons of the electrochromic material.

In order to read information from the first information layer 41, this first information layer 41 is made absorbent at the wavelength 1, by the application of a suitable voltage V1 between the first information layer 41 and the first counter electrode 43. The first information layer 41 becomes absorbent, except where marks have been written, because the ability to take up or release electrons of these marks is too small for allowing a reduction of the electrochromic material of these marks. Hence, the difference in absorption and reflection between the marks and the non-marked areas in the first information layer 41 is used for reading information from the first information layer 41.

In order to read information from the second information layer 45, the first information layer 41 is made transparent at the wavelength 1, by the application of a reverse voltage -V1 between the first information layer 41 and the first counter electrode 43. Hence, the whole first information layer 41, including the marks, becomes transparent. The first information layer 41 thus will not perturb the scanning of the second information layer 45. Then, the second information layer 45 is made absorbent at the wavelength 1, by application of a suitable voltage V2, equal to V1, between the second information layer 45 and the second counter electrode 47. The second information layer 45 becomes absorbent, except where marks have been written. Information can then be read from the second information layer 45.

It is important to note that information layers with electrochromic material having an ability to take up or release electrons which can be locally reduced by means of the optical beam at the wavelength 1 may be used in cooperation with additional electrodes, such as described in Figs. 2a to 2c. It should also be noted that these information layers may also be used in information carriers such as described in Figs. 3a to 3c, where an information layer serves as counter electrode for another information layer.

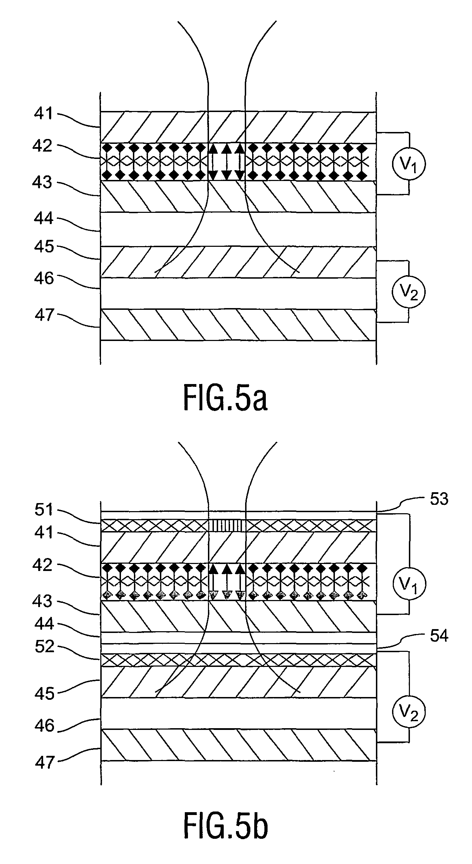

Fig. 5a shows a first RW (ReWritable) information carrier in accordance with the invention. This information carrier comprises a first information layer 41, a first electrolyte layer 42, a first counter electrode 43, a spacer layer 44 a second information layer 45, a second electrolyte layer 46 and a second counter electrode 47. The first information layer 41, the first electrolyte layer 42 and the first counter electrode 43 form a first information stack, the second information layer 45, the second electrolyte layer 46 and the second counter electrode 47 form a second information stack. The two information stacks are separated by the spacer layer 44.

The first and second electrolyte layers 42 and 46 have a temperature-dependent mobility threshold. This means that, below this threshold, the mobility of ions within these electrolyte layers is low, whereas the ion mobility is high above this threshold. Examples of such electrolyte layers are a polymeric matrix having a suitable glass transition, non-covalently bonded aggregates that show a suitable temperature-dependent equilibrium between an aggregated and a free form, and a polymeric matrix having a relatively strong temperature-dependent viscosity.

In order to write a mark on the first information layer 41, the optical beam is focused on this mark. The electrolyte layer under this mark is heated, and the temperature of the electrolyte layer under this mark exceeds the mobility threshold. A suitable potential difference V1 is applied between the first information layer 41 and the first counter electrode 43. As the ion mobility is low where the optical beam is not focused, the electrochromic process takes place only where the ion mobility is high, i.e. where a mark is to be written. As a consequence, the first information layer 41 becomes absorbent only where the optical beam is focused, and a mark is written where this optical beam is focused. Then, in order to write another mark on the first information layer 41, the optical beam is focused on the location where this other mark has to be written. When the potential difference V1 is subsequently cut, the written marks remain absorbent because of the bistability of the electrochromic material. The same process is repeated in order to write marks on the second information layer 45.

The electrolyte layers are chosen so as to have a decomposition temperature, which is lower than the temperature-dependent mobility threshold. In that case, the information layers are not degraded during writing, which means that the writing process is reversible.

In order to read information from the first information layer 41, the optical beam is focused on this information layer, and the difference in absorption between the marks and the non-marked area is used for read-out. No difference potential is needed between the first information layer 41 and the first counter electrode 43, as the marks remain absorbent without any applied potential difference. The same process is repeated in order to read information from the second information layer 45.

The information written on the information layers of this information carrier can be erased, and information can be rewritten on these information layers. In order to erase information written on the first information layer 41, this first information layer 41 is scanned by a relatively high-power optical beam. The first electrolyte layer 42 is heated, and the temperature of the first electrolyte layer 42 exceeds the mobility threshold. A potential difference -V 1 is applied between the first information layer 41 and the first counter electrode 43. As a consequence, the written marks become oxidized and hence transparent. The whole first information layer 41 thus becomes transparent, and marks can subsequently be rewritten on this first information layer 41, as described above. The same process is repeated in order to erase information written on the second information layer 45.

It is important to note that it is possible to design a WORM information carrier with the information carrier of Fig. 5a, for example by use of an electrochromic material which exhibits an irreversible transition, i.e. which cannot be reduced once it has been oxidized, or vice-versa. Examples of electrochromic materials which exhibit an irreversible transition are methylene red, methylene orange and erioglaucine. It is also possible to prevent the user from applying a reverse potential difference, so that the written data cannot be erased. Such a limitation may be included, for example, in the so-called lead-in of the information carrier.

In the example described above, the first information layer 41 perturbs the read-out of the second information layer 45, because it comprises absorbent marks, which interacts with the optical beam. Actually, in order to enable read-out of information written on the information layers, the absorption of the marks has to be relatively high. For example, an absorption of 20 per cent is required for the written marks. For a filling ratio of 0.25, this leads to an absorption of an information layer of about 5 per cent. The filling ratio represents the ratio between the marks and the non-marked area. If the information carrier comprises a high number of information layers, the read-out of the deepest information layers is perturbed by the presence of the information layers located above the deepest layers. As a consequence, the number of layers is limited to about 20 in this case.

In order to increase the number of layers of such a RW information carrier, the information layers further comprise a thermochromic material having temperature-dependent optical properties at the wavelength of the optical beam.

In this case, writing of information is performed as described hereinbefore, but the electrochromic material and the potential differences are chosen so that the absorption of the written marks is relatively low, for example 2 per cent. In order to read information from the first information layer 41, the optical beam is focused on this information layer 41. As the written marks have a non-zero absorption, the optical beam is absorbed, and the written marks of the first information layer 41 are heated. The temperature of the written marks reaches a threshold above which the absorption of the thermochromic material at the wavelength 1 becomes relatively high. Hence, the absorption of the written marks becomes sufficiently high to enable read-out of information from the first information layer 41. The same process is repeated for reading information from the second information layer 45. During read-out of information from the second information layer 45, the optical beam is focused on the second information layer 45. Hence, the written marks of the first information layer 41 are not heated, and the absorption of this written marks remains relatively low. As a consequence, read-out of the second information layer 45 is much less perturbed by the first information layer 41, when the information layers comprise a thermochromic material. As a consequence, the number of information layers can be increased by the use of a thermochromic material.

The thermochromic material may be mixed with the electrochromic material in the information layers. It is also possible to add a layer in each information stack, which layer comprises a thermochromic material and is adjacent to the layer comprising the electrochromic material. In this case, the information layer is the combination between the layer comprising the electrochromic material and the layer comprising the thermochromic material.

Fig. 5b shows a second RW information carrier in accordance with the invention. In this Figure, numbers identical to numbers of Fig.5a stand for the same entities. This information carrier further comprises a first photoconductive layer 51, a first working electrode 53, a second photoconductive layer 52 and a second working electrode 54.The first working electrode 53 and the first photoconductive layer belong to the first information stack, the second working electrode 54 and the second photoconductive layer 52 belong to the second information stack. The first and second working electrode 53 and 54 are chosen to be transparent at the wavelength 1.

A photoconductive layer allows a transfer of electrons between the working electrode and the information layer of its information stack, when illuminated at the wavelength of the optical beam.

In the information carrier of Fig. 5a, writing of a mark requires focusing of the optical beam on this mark during a relatively long time. Actually, the electrochromic process requires a certain time, for example a few milliseconds. During this relatively long time, the heat generated by the optical beam can diffuse into the electrolyte layer, thus leading to a larger mark than desired, because the ion mobility of the electrolyte layer is increased over a larger area than desired. As a consequence, only relatively large marks can be written, which leads to a relatively low data capacity per information layer.

In order to solve this problem, each information stack comprises a photoconductive layer, which allows a transfer of electrons between the working electrode and the information layer of its information stack, only when it is illuminated at the wavelength 1.

In order to write a mark on the first information layer 41, the optical beam is focused on this mark. As a consequence, only the portion located above this mark is illuminated at the wavelength 1. Hence, the electrochromic process can only take place in this mark, because the absorption of electrons is enabled only in this mark. The electrolyte layer under this mark is heated, and the temperature of the electrolyte layer under this mark exceeds the mobility threshold. A suitable potential difference V1 is applied between the first working electrode 53 and the first counter electrode 43. As a consequence, the first information layer 41 becomes absorbent only where the optical beam is focused, and a mark is written where this optical beam is focused. The same process is repeated for writing marks on the second information layer 45.

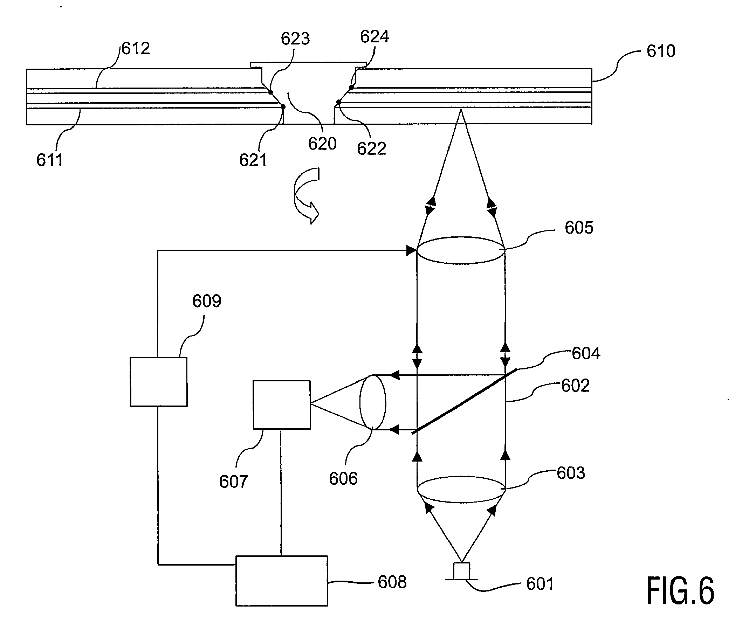

Fig. 6 shows an optical device in accordance with the invention. Such an optical device comprises a radiation source 601 for producing an optical beam 602, a collimator lens 603, a beam splitter 604, an objective lens 605, a servo lens 606, detecting means 607, measuring means 608 and a controller 609. This optical device is intended for scanning an information carrier 610. The information carrier 610 comprises two information stacks 611 and 612, each comprising at least an information layer.

During a scanning operation, which may be a writing operation or a reading operation, the information carrier 610 is scanned by the optical beam 602 produced by the radiation source 601. The collimator lens 603 and the objective lens 605 focus the optical beam 602 on an information layer of the information carrier 610. The collimator lens 603 and the objective lens 605 are focusing means. During a scanning operation, a focus error signal may be detected, corresponding to a positioning error of the optical beam 602 on the information layer. This focus error signal can be used in order to correct the axial position of the objective lens 605, so as to compensate for a focus error of the optical beam 602. A signal is sent to the controller 609, which drives an actuator in order to move the objective lens 605 axially.

The focus error signal and the data written on the information layer are detected by the detecting means 607. The optical beam 602, reflected by the information carrier 610, is transformed into a parallel beam by the objective lens 605, and then reaches the servo lens 606, via the beam splitter 604. This reflected beam then reaches the detecting means 607.

The radiation source 601, the collimator lens 603, the beam splitter 604, the objective lens 605, the servo lens 606, the detecting means 607, the measuring means 608 and the controller 609 form an optical pick-up unit. This optical pick-up unit can rotate and translate so that the whole information carrier 610 can be scanned.

The optical device further comprises a clamper 620 for receiving the information carrier 610. The clamper 620 comprises contacts 621 to 624. These contacts 621 to 624 are designed so that, when the information carrier 610 is placed in the optical device, they allow potential differences to be applied between the information layer and the counter electrode of an information stack. In this example, when the information carrier 610 is placed in the optical device, the first contact 621 is in electrical contact with the information layer of the first information stack 611, the second contact 622 is in electrical contact with the counter electrode of the first information stack 611, the third contact 623 is in electrical contact with the information layer of the second information stack 612 and the fourth contact 624 is in electrical contact with the counter electrode of the second information stack 612. Potential differences are then applied between the contacts. For example, a suitable potential difference is applied between the first and second contacts 621 and 622 in order to make the information layer of the first information stack 611 absorbent at the wavelength 1.

It should be noted that in another embodiment, the signal corresponding to information written in the information carrier 610 can be detected in transmission by a second objective lens, a second servo lens and second detecting means, which are placed opposite to the objective lens 605, the servo lens 606 and the detecting means 607, with respect to the information carrier 610.

It should also be noted that in another embodiment, the information carrier 610 may have a mirror at the back of the whole carrier, which mirror reflects the beam transmitted through all information stacks, including the addressed one. In this case, the optical scanning device as shown in Fig 6 may be used to read the data.

Any reference sign in the following claims should not be construed as limiting the claim.

## Claims

1. An information carrier (610) for scanning information by means of an optical beam (602) having a wavelength, said information carrier comprising at least two information stacks (611, 612), wherein each stack comprises a counter electrode (13, 17), an electrolyte layer (12, 16) and an information layer (11, 15), the information carrier being **characterized in that** the information layer comprises an electrochromic material whose optical properties at the wavelength of the optical beam depend on a potential difference applied between the information layer and the counter electrode.

2. An information carrier as claimed in claim 1, wherein an information layer (303) serves as counter electrode for another information layer (301).

3. An information carrier as claimed in claim 1, said information carrier comprising pits and lands.

4. An information carrier as claimed in claim 1, wherein the electrochromic material has an ability to take up or release electrons, which can be locally reduced by means of the optical beam in order to write information on the information layer.

5. An information carrier as claimed in claim 1, wherein the electrolyte layer (42, 46) has a temperature-dependent mobility threshold.

6. An information carrier as claimed in claim 5, wherein the information layer further comprises a thermochromic material having temperature-dependent optical properties at the wavelength of the optical beam.

7. An information carrier as claimed in claim 5 or 6, wherein an information stack further comprises a photoconductive layer (51, 52) for allowing a transfer of electrons in the information layer when illuminated at the wavelength of the optical beam.

8. A method of reading information from an information carrier by means of an optical beam having a wavelength, said information carrier comprising at least two information stacks, wherein each stack comprises a counter electrode, an electrolyte layer and an information layer, said method being **characterized in that** the information layer comprises an electrochromic material whose optical properties at the wavelength of the optical beam depend on a potential difference applied between the information layer and the counter electrode, the method comprising the steps of applying a potential difference between the information layer and the counter electrode of the information stack from which information is to be read and focusing the optical beam on the information layer of said stack.

9. A method of recording information on an information carrier by means of an optical beam having a wavelength, said information carrier comprising at least two information stacks, wherein each stack comprises a counter electrode, an electrolyte layer and an information layer, said method being **characterized in that** the information layer comprises an electrochromic material whose optical properties at the wavelength of the optical beam depend on a potential difference applied between the information layer and the counter electrode, the method comprising the step of focusing the optical beam on the information layer of the information stack on which information is to be recorded in order to locally reduce the ability of the electrochromic material to take up or release electrons.

10. A method of recording information on an information carrier by means of an optical beam having a wavelength, said information carrier comprising at least two information stacks, wherein each stack comprises a counter electrode, an electrolyte layer having a temperature-dependent mobility threshold and an information layer, said method being **characterized in that** the information layer comprises an electrochromic material whose optical properties at the wavelength of the optical beam depend on a potential difference applied between the information layer and the counter electrode, the method comprising the steps of focusing the optical beam on the information layer of the information stack on which information is to be recorded in order to locally heat the electrolyte layer of said stack to above said mobility threshold, and applying a potential difference between the information layer and the counter electrode of said stack.

11. A method of erasing information from an information layer where information has been recorded according to the method claimed in Claim 10, said method of erasing being **characterized in that** it comprises the steps of heating the electrolyte layer of said stack to above said mobility threshold by means of the optical beam, and applying an inverse potential difference between the information layer and the counter electrode of said stack.

## Patentansprüche

1. Informationsträger (610) zum Abtasten von Informationen mittels eines eine Wellenlänge aufweisenden optischen Strahls (602), wobei der Informationsträger mindestens zwei Informationsstapel (611, 612) umfasst, wobei jeder Stapel eine Gegenelektrode (13, 17), eine Elektrolytschicht (12, 16) und eine Informationsschicht (11, 15) umfasst, wobei der Informationsträger **dadurch gekennzeichnet ist, dass** die Informationsschicht ein elektrochromes Material umfasst, dessen optische Eigenschaften bei der Wellenlänge des optischen Strahls von einer zwischen der Informationsschicht und der Gegenelektrode angelegten Potentialdifferenz abhängen.

2. Informationsträger nach Anspruch 1, wobei eine Informationsschicht (303) als Gegenelektrode für eine weitere Informationsschicht (301) dient.

3. Informationsträger nach Anspruch 1, welcher Pits und Lands umfasst.

4. Informationsträger nach Anspruch 1, wobei das elektrochrome Material eine Fähigkeit aufweist, Elektronen aufzunehmen oder abzugeben, die sich mittels des optischen Strahls lokal reduzieren lässt, um Informationen auf die Informationsschicht zu schreiben.

5. Informationsträger nach Anspruch 1, wobei die Elektrolytschicht (42, 46) eine temperaturabhängige Beweglichkeitsschwelle aufweist.

6. Informationsträger nach Anspruch 5, wobei die Informationsschicht ferner ein thermochromes Material umfasst, welches bei der Wellenlänge des optischen Strahls temperaturabhängige optische Eigenschaften aufweist.

7. Informationsträger nach Anspruch 5 oder 6, wobei ein Informationsstapel ferner eine lichtelektrische Leitschicht (51, 52) umfasst, um bei Beleuchtung mit der Wellenlänge des optischen Strahls einen Transfer von Elektronen in der Informationsschicht zu ermöglichen.

8. Verfahren zum Lesen von Informationen von einem Informationsträger mittels eines eine Wellenlänge aufweisenden optischen Strahls, wobei der Informationsträger mindestens zwei Informationsstapel umfasst, wobei jeder Stapel eine Gegenelektrode, eine Elektrolytschicht und eine Informationsschicht umfasst, wobei das Verfahren **dadurch gekennzeichnet ist, dass** die Informationsschicht ein elektrochromes Material umfasst, dessen optische Eigenschaften bei der Wellenlänge des optischen Strahls von einer zwischen der Informationsschicht und der Gegenelektrode angelegten Potentialdifferenz abhängen, wobei das Verfahren die Schritte des Anlegens einer Potentialdifferenz zwischen der Informationsschicht und der Gegenelektrode des Informationsstapels, aus dem Informationen gelesen werden sollen, sowie des Fokussierens des optischen Strahls auf die Informationsschicht des Stapels umfasst.

9. Verfahren zum Aufzeichnen von Informationen auf einem Informationsträger mittels eines eine Wellenlänge aufweisenden optischen Strahls, wobei der Informationsträger mindestens zwei Informationsstapel umfasst, wobei jeder Stapel eine Gegenelektrode, eine Elektrolytschicht und eine Informationsschicht umfasst, wobei das Verfahren **dadurch gekennzeichnet ist, dass** die Informationsschicht ein elektrochromes Material umfasst, dessen optische Eigenschaften bei der Wellenlänge des optischen Strahls von einer zwischen der Informationsschicht und der Gegenelektrode angelegten Potentialdifferenz abhängen, wobei das Verfahren den Schritt des Fokussierens des optischen Strahls auf die Informationsschicht des Informationsstapels, auf welchem Informationen aufgezeichnet werden sollen, umfasst, um die Fähigkeit des elektrochromen Materials, Elektronen aufzunehmen oder abzugeben, lokal zu reduzieren.

10. Verfahren zum Aufzeichnen von Informationen auf einem Informationsträger mittels eines eine Wellenlänge aufweisenden optischen Strahls, wobei der Informationsträger mindestens zwei Informationsstapel umfasst, wobei jeder Stapel eine Gegenelektrode, eine Elektrolytschicht mit einer temperaturabhängigen Beweglichkeitsschwelle und eine Informationsschicht umfasst, wobei das Verfahren **dadurch gekennzeichnet ist, dass** die Informationsschicht ein elektrochromes Material umfasst, dessen optische Eigenschaften bei der Wellenlänge des optischen Strahls von einer zwischen der Informationsschicht und der Gegenelektrode angelegten Potentialdifferenz abhängen, wobei das Verfahren folgende Schritte umfasst: Fokussieren des optischen Strahls auf die Informationsschicht des Informationsstapels, auf welchem Informationen aufgezeichnet werden sollen, um die Elektrolytschicht des Stapels lokal über die Beweglichkeitsschwelle hinaus zu erwärmen, und Anlegen einer Potentialdifferenz zwischen der Informationsschicht und der Gegenelektrode des Stapels.

11. Verfahren zum Löschen von Informationen von einer Informationsschicht, auf welcher gemäß dem Verfahren nach Anspruch 10 Informationen aufgezeichnet wurden, wobei das Löschverfahren **dadurch gekennzeichnet ist, dass** es folgende Schritte umfasst: Erwärmen der Elektrolytschicht des Stapels mittels eines optischen Strahls über die Beweglichkeitsschwelle hinaus und Anlegen einer inversen Potentialdifferenz zwischen der Informationsschicht und der Gegenelektrode des Stapels.

## Revendications

1. Support d'informations (610) pour balayer des informations au moyen d'un faisceau optique (602) ayant une longueur d'onde, ledit support d'informations comprenant au moins deux empilements d'informations (611, 612), dans lesquels chaque empilement comprend une électrode de comptage (13, 17), une couche d'électrolyte (12, 16) et une couche d'informations (11, 15), le support d'informations étant **caractérisé en ce que** la couche d'informations comprend un matériau électrochromique dont les propriétés optiques à la longueur d'onde du faisceau optique dépendent d'une différence de potentiel appliquée entre la couche d'informations et la contre-électrode.

2. Support d'informations selon la revendication 1, dans lequel une couche d'informations (303) sert d'électrode de comptage pour une autre couche d'informations (301).

3. Support d'informations selon la revendication 1, ledit support d'informations comprenant des creux et des plats.

4. Support d'informations selon la revendication 1, dans lequel le matériau électrochromique a la capacité d'accepter ou de donner des électrons, qui peut être localement réduite au moyen d'un faisceau optique de façon à écrire des informations sur la couche d'informations.

5. Support d'informations selon la revendication 1, dans lequel la couche d'électrolyte (42, 46) a un seuil de mobilité dépendant de la température.

6. Support d'informations selon la revendication 5, dans lequel la couche d'informations comprend de plus un matériau thermochromique ayant des propriétés optiques et dépendant de la température à la longueur d'onde du faisceau optique.

7. Support d'informations selon la revendication 5 ou 6, dans lequel un empilement d'informations comprend de plus une couche photoconductrice (51, 52), pour permettre un transfert d'électrons dans la couche d'informations quand elle est éclairée à la longueur d'onde du faisceau optique.

8. Procédé de lecture d'informations d'un support d'informations au moyen d'un faisceau optique ayant une longueur d'onde, ledit support d'informations comprenant au moins deux empilements d'informations, dans lesquels chaque empilement comprend une électrode de comptage, une couche d'électrolyte et une couche d'informations, ledit procédé étant **caractérisé en ce que** la couche d'informations comprend un matériau électrochromique dont les propriétés optiques à la longueur d'onde du faisceau optique dépendent d'une différence de potentiel appliquée entre la couche d'informations et la contre-électrode, le procédé comprenant les étapes d'application d'une différence de potentiel entre la couche d'informations et la contre-électrode de l'empilement d'informations d'où les informations doivent être lues et de focalisation du faisceau optique sur la couche d'informations dudit empilement.

9. Procédé d'enregistrement d'informations sur un support d'informations au moyen d'un faisceau optique ayant une longueur d'onde, ledit support d'informations comprenant au moins deux empilements d'informations, dans lesquels chaque empilement comprend une électrode de comptage, une couche d'électrolyte et une couche d'informations, ledit procédé étant **caractérisé en ce que** la couche d'informations comprend un matériau électrochromique dont les propriétés optiques à la longueur d'onde du faisceau optique dépendent d'une différence de potentiel appliquée entre la couche d'informations et la contre-électrode, le procédé comprenant l'étape de focalisation d'un faisceau optique sur la couche d'informations de l'empilement d'informations sur lequel les informations doivent être enregistrées de façon à réduire localement la capacité du matériau électrochromique d'accepter ou de donner des électrons.

10. Procédé d'enregistrement d'informations sur un support d'informations au moyen d'un faisceau optique ayant une longueur d'onde, ledit support d'informations comprenant au moins deux empilements d'informations, dans lesquels chaque empilement comprend une électrode de comptage, une couche d'électrolyte ayant un seuil de mobilité dépendant de la température et une couche d'informations, ledit procédé étant **caractérisé en ce que** la couche d'informations comprend un matériau électrochromique dont les propriétés optiques à la longueur d'onde du faisceau optique dépendent d'une différence de potentiel appliquée entre la couche d'informations et la contre-électrode, procédé comprenant les étapes de focalisation du faisceau optique sur la couche d'informations de l'empilement d'informations sur lequel les informations doivent être enregistrées de façon à chauffer localement la couche d'électrolyte dudit empilement au seuil de mobilité dit plus haut, et d'application d'une différence de potentiel entre la couche d'informations et la contre-électrode dudit empilement.

11. Procédé d'effacement d'informations d'une couche d'informations où les informations ont été enregistrées selon le procédé revendiqué à la revendication 10, ledit procédé d'effacement étant **caractérisé en ce qu'**il comprend les étapes de chauffage de la couche d'électrolyte dudit empilement audit seuil de mobilité au moyen du faisceau optique, et d'application d'une différence de potentiel inverse entre la couche d'informations et la contre-électrode dudit empilement.
